Europäisches Patentamt

(19) European Patent Office

Office européen des brevets

(11) Numéro de publication : **0 336 858 B1**

# (12) FASCICULE DE BREVET EUROPEEN

(45) Date de publication du fascicule du brevet :
04.09.91 Bulletin 91/36

(51) Int. Cl.⁵ : **G01B 3/10, B65H 75/44**

(21) Numéro de dépôt : **89420111.0**

(22) Date de dépôt : 29.03.89

(54) **Frein d'envidage pour mesure roulante.**

(30) Priorité : 01.04.88 FR 8804639

(43) Date de publication de la demande :
11.10.89 Bulletin 89/41

(45) Mention de la délivrance du brevet :
04.09.91 Bulletin 91/36

(84) Etats contractants désignés :
**BE DE ES GB LU NL**

(56) Documents cités :
**FR-A- 598 648**
**FR-A- 1 436 086**
**FR-A- 2 192 550**
**US-A- 3 889 897**

(73) Titulaire : **SAM OUTILLAGE Société Anonyme**
**60, boulevard Thiers B.P. 528**
**F-42000 Saint-Etienne Cedex (FR)**

(72) Inventeur : **Bourrat, André**
**30, Avenue du Pilat**
**F-42000 Saint Etienne Loire (FR)**

(74) Mandataire : **Perrier, Jean-Pierre et al**
**Cabinet GERMAIN & MAUREAU 12 rue de la**
**République**
**F-42000 St-Etienne (FR)**

## Description

Les mesures roulantes, plus généralement dénommées, mètre-ruban, sont en général composées d'un tambour qui, porteur du ruban de mesure et monté libre en rotation sur un axe solidaire d'un boîtier, est relié à cet axe par un ressort en spirale logé à l'intérieur de ce tambour.

Le déroulage du ruban métallique gradué hors du boîtier bande le ressort en spirale qui assure, par élasticité, l'enroulage du ruban dès que celui-ci est lâché.

Ce dispositif de rappel donne entière satisfaction pour des rubans ayant une longueur de trois mètres mais crée un problème au-delà. En effet, bien que le ressort en spirale ait une longueur inférieure à celle du ruban gradué, dans le rapport des diamètres,respectivement, du tambour et de l'axe, sa propre longueur s'accroît avec celle du ruban gradué et conduit, pour des rubans gradués, de cinq mètres, à une force de rappel très élevée. Ainsi, lors de l'enroulage d'un ruban de grande longueur, la bobine d'enroulement du ruban prend, sous l'effet du rappel du ressort en spirale, une vitesse de rotation s'accélérant régulièrement pour devenir maximale et atteindre, par exemple, mille tours/minute lorsque le crochet vient buter contre le boîtier. En raison de cela et de l'augmentation progressive du diamètre d'enroulement du ruban sur la bobine, la vitesse linéaire du ruban s'accroît également. Même si le ruban est parfaitement aligné avec le boîtier avant l'enroulage, dans les deux derniers mètres de son enroulage, il tend à fouetter, ce qui provoque des défauts d'enroulage, son froissage et voire même sa cassure. Par ailleurs, en fin d'enroulage, le choc dû à l'arrêt par butée du crochet d'extrémité contre le boîtier, est très important puisque ce dernier absorbe une énergie cinétique tenant compte de la masse totale de la bobine, du diamètre d'enroulement et de la grande vitesse de rotation de celle-ci. Ce choc entraîne une détérioration du boîtier, de la bobine, des attaches du ressort en spirale, du ruban et du crochet.

Pour remédier à cela, il est déjà connu de munir la mesure roulante d'un frein limitant la vitesse de rotation du tambour et composé de masselottes agissant de manière centrifuge. Une telle mesure roulante est décrite par exemple dans le document FR-A-1436086. Un tel dispositif intervient aussi bien lors de l'enroulage que lors du déroulage, ce qui est gênant car le déroulage doit pouvoir s'effectuer librement. Un autre inconvénient de ce dispositif est qu'il accroît le poids de la mesure roulante alors même que pour ce type de produit, se conservant dans les poches, la légèreté est importante.

La présente invention a pour but de fournir un frein d'enroulage à masselottes qui soit peu lourd et qui assure un freinage beaucoup plus efficace lors de l'enroulage que lors du déroulage.

Ce frein est du type comportant des masselottes coopérant avec une piste circulaire lors de la rotation dans le boîtier du tambour portant le ruban gradué.

Selon l'invention, telle que définie dans les revendications, ces masselottes sont disposées transversalement dans un logement ménagé entre l'une des parois diamétrales du boîtier et la joue en vis-à-vis du tambour, ce logement comportant une face cylindrique de frottement, et sont disposées radialement entre, d'une part, un berceau intérieur solidaire du tambour, et d'autre part, l'extrémité libre d'une languette élastique extérieure qui, sensiblement circulaire, est solidaire du berceau suivant par son autre extrémité, extrémité disposée en aval lors de l'enroulage, et est apte à venir en contact de frottement avec la face cylindrique de frottement du logement.

Ainsi, lors de la rotation du tambour, chaque masselotte tend, sous l'action de la force centrifuge, à appliquer l'extrémité libre de la languette correspondante contre la face cylindrique de frottement du boîtier. En fonction de la position, amont ou aval de ces zones de contact par rapport au point de liaison de la languette avec le berceau et le tambour, position dépendant du sens de rotation, la languette est soit tirée soit poussée. Lorsqu'elle est tirée, c'est à dire lors du déroulage du ruban gradué, les forces de réaction dues à son frottement contre le boîtier tendent à l'éloigner de celui-ci et en conséquence à réduire la surface en frottement et l'effort résistant provenant de son frottement. Inversement, lorsque cette languette est poussée, c'est à dire lors de l'enroulage, les forces de réaction dues au frottement sur le boîtier tendent à plaquer davantage cette languette sur le boîtier en accroissant ainsi les surfaces de frottement en contact et en conséquence l'effort d'application et de freinage.

Ce dispositif simple, léger et peu onéreux, assure ainsi un freinage plus efficace à l'enroulage.

D'autres caractéristiques et avantages ressortiront de la description qui suit en référence au dessin schématique annexé représentant un mètre-ruban muni d'une forme d'exécution du dispositif de freinage, selon l'invention définie dans les revendications.

Figure 1 est une vue en coupe transversale du mètre ruban,

Figures 2 et 3 en sont des vues en coupe suivant II-II de figure 1 illustrant le fonctionnement du frein, respectivement dans la face de déroulage et dans la face d'enroulage.

De façon connue, ce mètre-ruban est composé d'un boîtier 2 qui, dans cette forme d'exécution, est en deux parties, d'un tambour 3 monté libre en rotation sur un axe central 4 du boîtier, d'un ressort en spirale 5 dont l'une des extrémités 6a est liée au tambour 3 et dont l'autre extrémité 6b est liée à l'axe 4 et, enfin, d'un mètre ruban 7 dont l'une des extrémités est accrochée en 7a au tambour 4. Bien entendu, le boîtier comporte une ouverture pour le passage de l'autre extrémité du ruban 7.

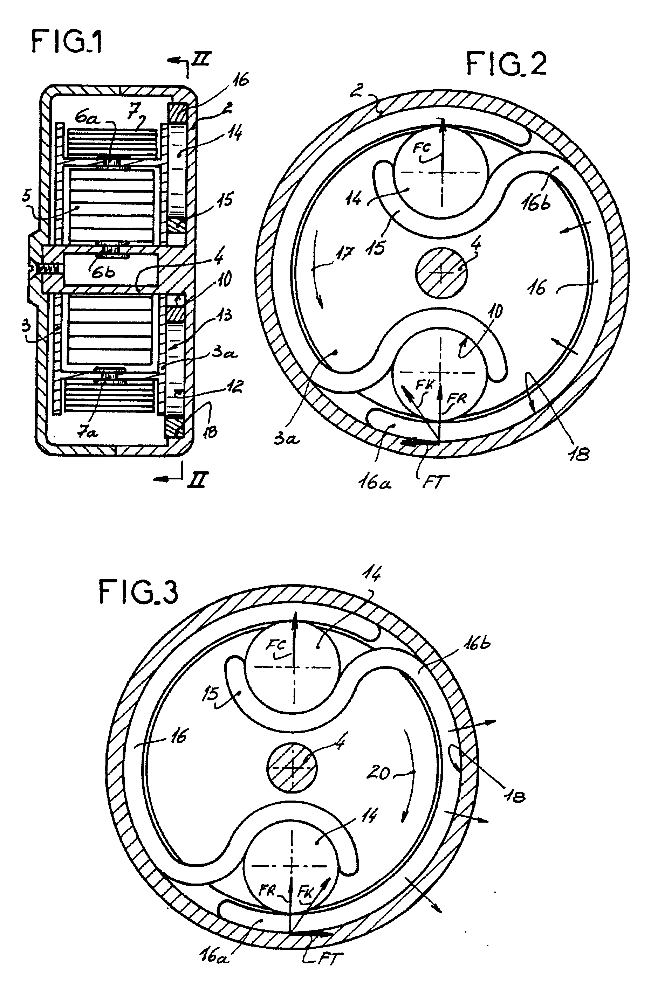

Selon l'invention, ce mètre ruban est muni d'un frein d'enroulage disposé dans un logement 10 ménagé entre la paroi diamétrale 12 du boîtier 2 et la face 13 de la joue 3a du tambour 3. Ce dispositif est constitué par deux masselottes 14 disposées dans des berceaux 15 solidaires de la joue 3a précitée. Chacune des masselottes est constituée par un disque métallique de forme générale cylindrique. Les deux berceaux 15 sont diamétralement opposés de part et d'autre de l'axe 4 et sont disposés dos à dos avec leur concavité tournée vers l'extérieur. Le dispositif de freinage comprend également deux languettes élastiques 16 dont l'une des extrémités 16a est libre, et vient devant la masselotte suivante et dont l'autre extrémité est liée à la joue 3a du tambour. Dans cette forme d'exécution, cette dernière extrémité fait corps avec le berceau 15 correspondant. Ces languettes sont disposées de manière que leurs extrémités 16b liées au tambour soient en amont par rapport à leur extrémité 16a lorsque le tambour est entraîné dans le sens du déroulage représenté par la flèche 17 à la figure 2. Ces languettes de forme générale semi-circulaires font vis-à-vis à une face de frottement cylindrique 18 ménagée sur la périphérie du logement 10 du boîtier.

Les languettes 16 et les berceaux 14 peuvent être réalisées indépendamment du tambour et être rapportées sur lui par clipsage ou tout autre moyen, mais peuvent aussi être réalisées en même temps que le tambour. Dans ces conditions, et pour faciliter l'opération de moulage, les languettes 16 ont un diamètre intérieur plus grand que le diamètre extérieur du tambour 3.

Avec ce dispositif, lors du déroulage du mètre ruban, les languettes 16 sont tirées par le tambour 3, c'est à dire ont à leurs extrémités libres 16a qui sont en aval par rapport au sens de rotation. Lors de la rotation du tambour 3, les masselottes 14 sont soumises à une force centrifuge radiale vers l'extérieur qui, comme montré par les flèches FC, tend à les plaquer contre l'extrémité libre 16a des languettes 16 et, en conséquence, qui tend à plaquer ces languettes contre la face de frottement 18. Simultanément, le boîtier exerce, sur l'extrémité 16a de la languette, d'une part, une force de réaction radiale FR s'opposant à la force centrifuge et d'autre part, une force tangentielle FT s'opposant à l'avancement de la languette correspondante. Ces deux forces FR et FT forment une composante FK qui est inclinée sur l'aval et tend donc à tirer l'extrémité 16a de chaque languette et à éloigner sa partie centrale incurvée de la face de frottement 18.

A l'inverse, lors de la rotation du tambour 3 dans le sens de l'enroulage, représenté par la flèche 20 à la figure 3, la composante FK des forces de réaction, s'exerçant toujours en direction de la partie aval de la languette mais en sens inverse par rapport à la figure 2, tend à pousser la languette et à plaquer sa partie centrale contre la face de frottement 18, ce qui a pour effet d'augmenter les surfaces en contact et, par le frottement qui en résulte, d'augmenter la force de freinage. En d'autres termes, si lors du déroulage, le dispositif de freinage fournit un couple résistant minime, lors de l'enroulage, il fournit un effort résistant beaucoup plus important assurant les effets recherchés. Il est à noter que ce dispositif simple est peu volumineux, très léger, et par, la simplicité des pièces le composant, est peu onéreux.

**Revendications**

1. Frein d'enroulage pour mesure roulante du type comportant des masselottes (14) coopérant avec une piste circulaire (18) lors de la rotation dans un boîtier (2) d'un tambour (3) portant un ruban gradué (7), frein dans lequel ces masselottes (14) sont disposées transversalement dans un logement (10) ménagé entre l'une des parois diamétrales (12) du boîtier (2) et la joue (3a) en vis-à-vis du tambour (3), logement comportant la face cylindrique (18) de frottement, caractérisé en ce que les masselottes (14) sont disposées radialement chacune entre, d'une part, un berceau intérieur (15), solidaire du tambour (3), et, d'autre part, l'extrémité libre (16a) d'une languette élastique (16) qui, sensiblement circulaire, est solidaire du berceau suivant par son autre extrémité (16b), extrémité disposée en aval lors de l'enroulage, et est apte à venir en contact de frottement avec la face cylindrique de frottement du logement.

2. Frein d'enroulage selon la revendication 1, caractérisé en ce que les masselottes (14) sont en forme de disque et sont disposées dans des berceaux (15) semi-circulaires.

3. Frein selon l'une quelconque des revendications 1 et 2 caractérisé en ce que le diamètre intérieur des languettes (16) est plus grand que le diamètre extérieur des joues du tambour (3).

4. Frein selon l'ensemble des revendications 1 à 3, caractérisé en ce que les berceaux (15) et les languettes (16) sont solidaires du tambour (3) avec lequel ils viennent de moulage.

5. Frein selon l'une quelconque des revendications 1 à 3, caractérisé en ce que les berceaux (15) sont munis de crochets s'encliquetant dans la paroi diamétrale du tambour (3).

**Patentansprüche**

1. Aufwickelbremse für ein Rollmaßband mit Fliehgewichten (14), die bei der Rotation einer ein Maßband (7) tragenden Trommel (3) in einem Gehäuse (2) mit einer kreisförmigen Bahn (18) zusammenwirken, dadurch gekennzeichnet, daß die Fliehgewichte (14) quer in einem die zylindrische Reibungsfläche (18) aufweisenden Aufnahmeraum (10) angeordnet sind, der zwischen einer der diametralen Wände (12) des Gehäuses (2) und dem gegenüberliegenden Seitenteil (3a) der Trommel (3) ausgebildet ist, und daß jedes der Fliehgewichte (14) in radialer Richtung zwischen einer mit der Trommel (3) fest verbundenen inneren wiegenartigen Halterung (15) einerseits und dem freien Ende (16a) einer annähernd kreisrunden elastischen Zunge (16) andererseits angeordnet ist, die mit ihrem anderen Ende (16b), das beim Aufwickeln in Bewegungsrichtung hinten liegt, fest mit der nachfolgenden wiegenartigen Halterung verbunden ist und mit der zylindrischen Reibungsfläche des Aufnahmeraums in Reibungskontakt treten kann.

2. Aufwickelbremse nach Anspruch 1, dadurch gekennzeichnet, daß die Fliehgewichte (14) die Form von Scheiben haben und in halbkreisförmigen wiegenartigen Halterungen (15) angeordnet sind.

3. Bremse nach einem der Ansprüche 1 und 2, dadurch gekennzeichnet, daß der Innendurchmesser der Zungen (16) größer ist als der Außendurchmesser der Seitenteile der Trommel (3).

4. Bremse nach Anspruch 1 bis 3, dadurch gekennzeichnet, daß die wiegenartige Halterung (15) und die Zungen (16) mit der Trommel (3) fest verbunden sind, mit der sie einstückig ausgebildet sind.

5. Bremse nach einem der Ansprüche 1 bis 3, dadurch gekennzeichnet, daß die wiegenartigen Halterungen (15) mit Haken versehen sind, die in die diametrale Wand der Trommel (3) einrasten.

**Claims**

1. A winding brake for a coiled measure of the kind including blocks (14) cooperating with a circular track (18) during rotation within a casing (2) of a drum (3) carrying a graduated tape (7), characterised in that these blocks (14) are disposed transversely in a housing (10) formed between one of the diametrical walls (12) of the casing (2) and the opposing cheek (3a) of the drum (3), said housing including the cylindrical rubbing face (18), and are disposed radially each between, on the one hand, an internal cradle (15) rigid with the drum (3) and, on the other hand, the free end (16a) of a resilient tongue (16) which is substantially circular and rigid with the next cradle by its other end (16b) which is disposed forwardly during winding, and is adapted to come into rubbing contact with the cylindrical rubbing face of the housing.

2. A winding brake according to Claim 1, characterised in that the blocks (14) are in the form of discs and are disposed in semi-circular cradles (15).

3. A brake according to any one of Claims 1 and 2, characterised in that the internal diameter of the tongues (16) is greater than the external diameter of the cheeks of the drum (3).

4. A brake according to all of Claims 1 to 3, characterised in that the cradles (15) and tongues (16) are rigidly with the drum (3) with which they are moulded.

5. A brake according to any one of Claims 1 to 3, characterised in that the cradles (15) are provided with hooks ratcheting in the diametrical wall of the drum (3).

# FIG.1

# FIG.2

# FIG.3